# EUROPÄISCHE PATENTSCHRIFT

(11) **EP 1 842 698 B1**
(45) Veröffentlichungstag und Bekanntmachung des Hinweises auf die Patenterteilung: **21.01.2009**
(21) Anmeldenummer: 07102675.1
(22) Anmeldetag: 20.02.2007
(51) Int. Cl.: B60C 19/12

(54) **Fahrzeugluftreifen mit einer pannenverhindernden Einlage**
Vehicle pneumatic tyre with insert to prevent breakdowns
Pneus de véhicule dotés d'un dépôt empêchant les pannes

(30) Priorität: 08.04.2006 DE 102006016690
(43) Veröffentlichungstag der Anmeldung: 10.10.2007
(73) Patentinhaber: Continental Aktiengesellschaft, 30165 Hannover (DE)
(72) Erfinder: Fidan, M. Sadettin, 30827, Garbsen (DE); Wahl, Günter, 31249, Hohenhameln/Clauen (DE)

(56) Entgegenhaltungen:
- EP-A- 0 135 463
- EP-A1- 1 099 573
- EP-A1- 1 174 290
- WO-A-20/05039894
- GB-A- 2 240 953
- JP-A- 57 044 504

## Beschreibung

Die Erfindung betrifft einen Fahrzeugluftreifen, bestehend aus einem profilierten Laufstreifen, einem mehrlagigen Gürtelverband, einer luftdichten Innenschicht, einer zumindest einlagig ausgeführten Karkasse, zugfesten Kernen, Seitenwänden und einer schützenden Einlage zur Vermeidung von Luftdruckverlust durch Undichtigkeit der Innenschicht durch einen von außen in den Reifen eindringenden Gegenstand, wobei die Einlage unterhalb des profilierten Laufstreifens über den Umfang geschlossen angeordnet ist und zumindest die Breite der Reifenaufstandsfläche aufweist, wobei die Einlage flexibel und zum Ausweichen bei eindringenden Gegenständen leicht verform- und dehnbar ausgeführt ist.

Pannensichere Fahrzeugluftreifen sind hinlänglich bekannt. Es gibt zwei unterschiedliche Lösungsansätze, um einen Fahrzeugluftreifen pannensicher zu gestalten. Der erste Lösungsansatz setzt im Pannenfall bei Druckluftverlust auf Notlaufeigenschaflen durch beispielsweise verstärkte, selbstragende Seitenwandkonstruktionen.

Der weitere Lösungsansatz, so wie der der vorliegenden Erfindung, soll einen Druckluftverlust und somit den Pannenfall von vornherein verhindern. Hier ist eis beispielsweise aus der EP 1 378 397 B 1 bekannt, eine selbstdichtende Einlage an der axial innen gelegenen Seite der Innenschicht eines bereits vulkanisierten Reifens anzuordnen. Die selbstdichtende Einlage weist eine schwammartige Lage auf, die flüssiges Dichtungsmittel enthält. Ein Einstichkanal eines bis zur selbstdichtenden Lage eingedrungenen Gegenstandes wird durch das in dieser Lage enthaltene Dichtmittel verfüllt. Nachteilig ist, dass die Einlage in einem weiteren, an den Reifenaufbau und Vulkanisation anschließenden Arbeitsschritt am Reifen angeordnet werden muss. Dieses ist zeit- und kostenaufwendig. Die Einlage selbst ist in ihrer Herstellung teuer. Weiterhin kann das Dichtmittel einer solchen selbstdichtenden Lage nur Undichtigkeiten bis zu einem bestimmten Durchmesser abdichten. Bei größeren Gegenständen funktioniert die Dichtung nicht mehr zuverlässig. Bei tief in den Reifen eindringenden Gegenständen wird die luftdicht ausgeführte Innenschicht in jedem Fall verletzt, was zu einer Schwachstelle im Reifen trotz Selbstdichtung führt. Zudem können die Fahreigenschaften verändert werden. Aus der WO 2005/039894 A1 ist ein Fahrradreifen mit einer Pannenschutzlage, vorzugsweise aus Vectran®, bekannt geworden. Die Pannenschutzlage ist zwischen Karkasse und Laufstreifen oder zwischen den Karkasslagen unterhalb des Laufstreifens angeordnet. Die Pannenschutzlage ist fest mit den sie umgebenden Lagen verbunden. Aus der EP 0 135 463 A1 ist ein Fahrzeugluftreifen bekannt geworden, der eine Dichtmittellage zur Abdichtung von Undichtigkeiten durch in den Reifen eindringenden und diesen verletzenden Gegenständen aufweist. Die Dichtmittellage ist zwischen Karkasse und Innenschicht angeordnet und fest mit den sie umgebenden Lagen verbunden. Aus der EP 1 174 290 A1 ist weiterhin ein gattungsgemäßer Fahrzeugluftreifen bekannt geworden, an dessen Innenschicht radial innen eine zusätzliche Lage angeordnet ist, welche trotz einer Verletzung des Reifens durch in den Reifen eindringende Gegenstände die Luftdichtigkeit gewährleisten soll. Die zusätzliche Lage ist derart beschaffen, dass sie in Höhe der Wulstbereiche des Reifens fest mit diesem verbunden ist. Im Bereich des Laufstreifens haftet die zusätzliche Lage nicht an der oberhalb der zusätzlichen Lage angeordneten Schicht an und ist zudem flexibel und zum Ausweichen bei eindringenden Gegenständen leicht verform- und dehnbar ausgeführt. Jedoch schützt die zusätzliche Lage nicht die Innenschicht vor eindringenden Gegenständen. Zudem ist erfordert die zusätzliche Lage einen hohen Materialeinsatz und ist nicht ohne Weiteres in den üblichen Reifenaufbauprozess zu integrieren.
Ausgehend von der EP 1 174 290 A1 ist die Aufgabe der Erfindung, einen pannenresistenten Reifen mit einer Einlage zu schaffen, die innerhalb des üblichen Reifenaufbauprozesses -vor der Vulkanisation- in den Reifen einzubringen ist. Ein Reifen mit dieser Einlage soll kostengünstig und einfach herstellbar sein und soll weiterhin einen Durchstich der luftdicht ausgeführten Innenschicht des Reifens durch einen von außen in den Reifen eindringenden Gegenstand verhindern. Weiterhin soll die Anordnung dieser Einlage die Fahreigenschaft des Reifens gegenüber Reifen ohne Einlage nicht verändern.

Die Aufgabe wird gelöst, indem die Einlage zwischen Innenschicht und Karkasse zur Verhinderung von Durchstichen der Innenschicht angeordnet ist, dass zumindest die radial außen gelegene Oberfläche der Einlage aus einem Material oder einer Beschichtung besteht, welches nicht an der oberhalb der Einlage angeordneten Schicht haftet.

Erfindungswesentlich ist, dass die zwischen Innenschicht und Karkasse angeordnete Einlage nicht an der oberhalb der Einlage angeordneten Schicht chemisch anhaftet, sondern bei einem von außen eindringenden Gegenstand in alle Raumrichtungen gleich dehnbar und flexibel reagiert. Wenn ein Gegenstand den erfindungsgemäßen Reifen von außen bis zur Einlage durchdringt, wird die hochflexible und dehnbare Einlage durch diesen Gegenstand nicht durchstochen, sondern in einem trichterförmigen Bereich um den eindringenden Gegenstand nach axial innen ausweichen. Die Einlage weist eine hohe Energieabsorptionsfähigkeit auf.
Die Einlage und somit die radial innen unterhalb der Einlage angeordnete Innenschicht wird nicht durchstochen, so dass der Reifen luftdicht erhalten bleibt.

Die Einlage wird während des üblichen Reifenaufbauprozesses eines Fahrzeugluftreifens als ein Reifenbauteil mit um die zylindrische Reifenaufbautrommel oberhalb der luftdicht geführten Innenschicht herumgelegt und nach Beendigung des Reifenaufbaus vulkanisiert.

Die unerwünschte chemische Haftung mit einer oberhalb der Einlage aufliegenden Schicht, zumeist der Karkasslage, kann dadurch zuverlässig und dauerhaft vermieden werden, dass zumindest die radial außen gelegene Oberfläche der Einlage aus Teflon besteht oder eine Beschichtung aus Teflon aufweist. Durch diese Beschichtung ist eine chemische Haftung mit der oberhalb der Einlage aufliegenden Schicht verhindert.

Die Einlage muss zwei Eigenschaften aufweisen, einerseits muss sie flexibel und dehnbar sein, andererseits darf sie nicht von dem eindringenden Gegenstand durchstochen werden dürfen. Daher ist es vorteilhaft, wenn die Einlage eine Polymerlage oder eine in Gummi eingebettete Lage oder eine in Gummi eingebettete Cordlage aus Nylon 6, Nylon 6.6, Elastan, Polyamid, Aramid oder Leichtmetall ist.

In einer besonderen Ausführungsform, bei der parallel zur ersten Innenschicht zwischen dieser ersten Innenschicht und der Karkasse eine zweite Innenschicht angeordnet ist, sind die erste und die zweite Innenschicht derart zueinander angeordnet sind, dass beide die durchstichresistente Einlage zwischen sich einschließen. Im Sonderfall der geschlossenen Enden beider Innenschichten kann oberhalb der durchstichresistenten Einlage eine nicht haftende Latexlage eingebracht sein. Es ist eine höhere Stabilität der Einlage erreicht. Durch den Einschluss der Einlage zwischen zwei Innenschichten ist sie innerhalb des Reifens fest nach Art eines Verbundes, aber ohne chemische Haftung zur oberhalb gelegenen Schicht, angeordnet.

Der erfindungsgemäße Reifen ist ebenfalls bei seitlich durch die Seitenwände eindringenden Gegenständen pannenresistent, wenn die durchstichresistente Einlage bis in die Seitenwände reichend ausgeführt ist. Die durchstichresistente Einlage kann sich bis zum Wulstbereich erstrecken.

Vorteilhaft ist es, wenn die durchstichresistente Einlage mehrlagig ausgeführt ist.

In einer Ausführungsform besteht die Einlage aus einer Gummimatrix, in die wenigstens zwei voneinander beabstandete Lagen eingebettet sind, die parallel zur Einlagenoberfläche angeordnet sind und aus rigiden Material bestehen. "Rigide" meint hier eine Materialbeschaffenheit, die starr, steif, fest und unnachgiebig ist, wodurch Durchstiche durch spitze Gegenstände wirksam vermieden werden.

In einer Abwandlung der vorbeschriebenen Ausführungsform des Reifens ist jede Lage der Einlage in regelmäßigen Abständen durchbrochen, wobei die zweite Lage (oder jede weitere Lage) derart gegenüber der ersten (benachbarten) Lage versetzt angeordnet ist, so dass die Durchbrechungen einer Lage unter- oder oberhalb von rigiden Lagenabschnitten der benachbarten weiteren Lage liegen.

Die Gummimatrix der Einlage ist aus einer Gummimischung, die nach der Reifenvulkanisation hochflexibel und dehnbar ist. Die in der Einlage eingebetteten Lagen und Lagenabschnitte bestehen aus rigidem Material. Es handelt sich bei allen Ausführungen um dünne Lagen oder Filme beispielsweise aus Polyester, Polyamid und/oder Metalle oder Metalllegierungen, vorzugsweise Leichtmetalle. Die Lagenabschnitte weisen vorteilhafterweise eine Breite von 5mm und eine Länge von 300 mm, vorzugsweise eine Breite von 20 mm und eine Länge von 150 mm auf. Die Lagenabschnitte können aber auch sämtlich oder teilweise Kreise und/oder Ovale mit einem Durchmesser von 5 mm bis 50 mm, vorzugsweise 10 mm sein. Die Breite einer Lage ist von der Dimension des Reifens abhängig und beträgt bei einem PKW-Reifen von 100 mm bis 500 mm.

Bei einem von außen eindringenden Gegenstand, der auf die Einlage stößt, wirken die in die Einlage eingebetteten Lagen bzw. Lagenabschnitte aus rigidem Material als "Protektoren, Schutzschilde", durch die der Gegenstand nicht durchstoßen kann. Die Energie des eindringenden Gegenstandes wird in Dehnung der flexiblen, die Lagen, - abschnitte fest umschließenden Gummimatrix umgesetzt. Beim Einsatz von Lagenabschnitten innerhalb der Einlage weist die Einlage eine höhere Flexibilität und Verformbarkeit durch Bewegbarkeit der einzelnen Lagenabschnitte untereinander auf.

Diese Verformbarkeit der Einlage wird weiter erhöht, wenn wenigstens eine weitere Lage in Form eines Textilgewebes zwischen den Lagen aus rigidem Material angeordnet ist, wobei das Textilgewebe aus hochdehnbarem Material wie beispielsweise Nylon 6, Nylon 6.6 und/oder Elastan besteht.

Bei einer weiteren Ausführungsform der im Reifen angeordneten Einlage, sind die eingebetteten Lagen parallel zueinander in einer Gummimasse derart eingebettet, dass sie dachziegelartig einander überlappend und gegeneinander verschiebbar sind. Hierdurch ist eine optimale Abdeckung der Einlage durch rigide dachziegelartig sich überlappende Lagenabschnitte erreicht, wobei dennoch eine hohe Flexibilität der gesamten Einlage erhalten bleibt.

Diese weitere Ausführungsform kann flexibler und dehnbarer gestaltet sein, wenn wenigstens eine weitere Lage in Form eines hochdehnbaren Textilgewebes oberhalb und/oder unterhalb der dachziegelartig einander überlappenden Lagen parallel zur Oberfläche der Einlage angeordnet ist.

Weitere Merkmale, Vorteile und Einzelheiten der Erfindung werden anhand der Zeichnungen, dies schematische Ausführungsbeispiele darstellen, näher erläutert. Es zeigen die:
- Fig.1: einen Querschnitt eines erfindungsgemäßen Reifens mit einer pannenresistenten Einlage
- Fig.2a: eine isolierte dreidimensionale Darstellung der Einlage vor Eindringen eines spitzen Gegenstandes
- Fig.2b: eine Darstellung der Einlage der Fig.2a bei Eindringen des Gegenstandes
- Fig.2c: eine Darstellung der Einlage der Fig.2a bei Eindringen des Gegenstandes
- Fig.3: eine dreidimensionale Darstellung einer Ausführungsform der Einlage
- Fig.4: eine dreidimensionale Darstellung einer anderen Ausführungsform der Einlage
- Fig.5: eine dreidimensionale Darstellung einer weiteren Ausführungsform der Einlage
- Fig.6: einen Querschnitt einer weitere Ausführungsform der Einlage
- Fig.7: einen Querschnitt durch eine andere Ausführungsform der Einlage
- Fig.8: eine abgedeckte Aufsicht auf die Lagen der Einlage der Fig.7.

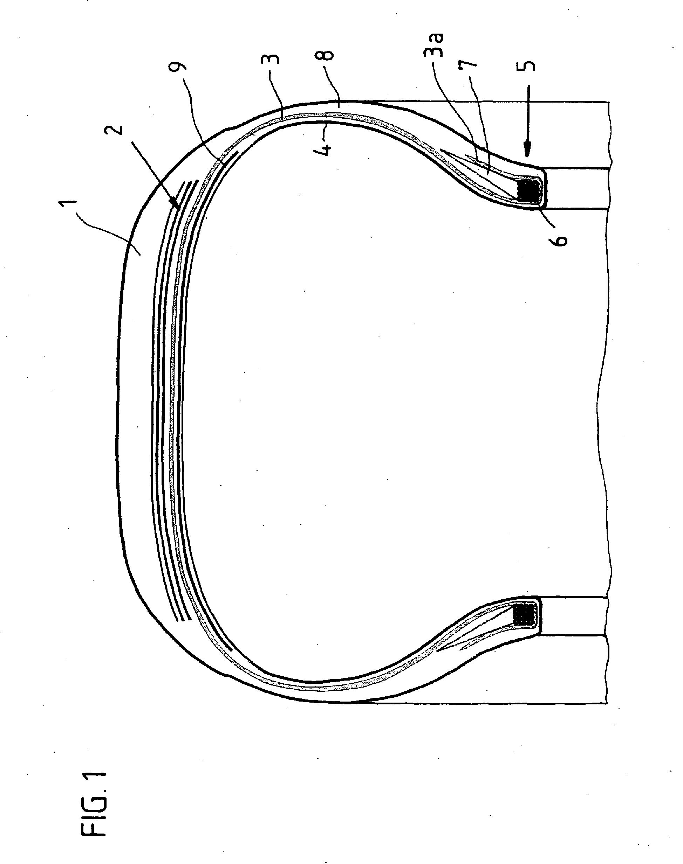

Die Fig.1 zeigt die wesentlichen Bestandteile, aus welchen sich der erfindungsgemäße Reifen zusammensetzt. Dieses sind ein profilierter Laufstreifen 1, ein bei der gezeigten Ausführung aus zwei Lagen und einer Bandage bestehender Gürtelverband 2, eine Karkasse 3, eine luftdicht ausgeführte Innenschicht 4, Wülste 5 mit Wulstkernen 6 und Wulstkernprofilen 7, sowie Seitenwände 8 und zwischen Innenschicht 4 und Karkasse 3 angeordnete Einlage 9. Die Lagen des Gürtels 2 bestehen aus in eine Gummimischung eingebetteten Festigkeitsträgern aus Stahlcord, welche innerhalb jeder Lage parallel zueinander verlaufen, wobei die Stahlcorde der einen Lage in kreuzender Anordnung zu den Stahlcorden der weiteren Lage orientiert sind und mit der Reifenumfangsrichtung jeweils einen Winkel zwischen 15° und 30° einschließen. Auch die Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Karkasse 3 ist um die Wulstkerne 6 von innen nach außen geführt, ihre Hochschläge 3a verlaufen neben den Wulstkernprofilen 7 in Richtung Gürtel 2.

Die Einlage 9 verhindert Verletzungen der Innenschicht durch von außen in den Reifen eindringenden, spitzen Gegenständen. Die Einlage 9 ist während des Aufbaus des Reifens auf der Innenschicht 4 positioniert worden und befindet sich daher zwischen dieser und der Karkassse 3. Die Einlage 9 ist ringförmig über den Umfang geschlossen zumindest unterhalb des Profil- und Schulterbereichs angeordnet. Die Einlage 9 weist an ihrer zur Karkasse 3 weisenden Oberseite 10 eine Beschichtung aus Teflon auf, die die chemische Haftung zwischen Oberseite der Einlage 10 und der Karkasse 3 verhindert. Die Unterseite 11 der Einlage ist fest mit der Innenschicht 4 verbunden. Die Dicke der Einlage 9 ist über die gesamte Einlage gleich und beträgt hier 0,4 mm.

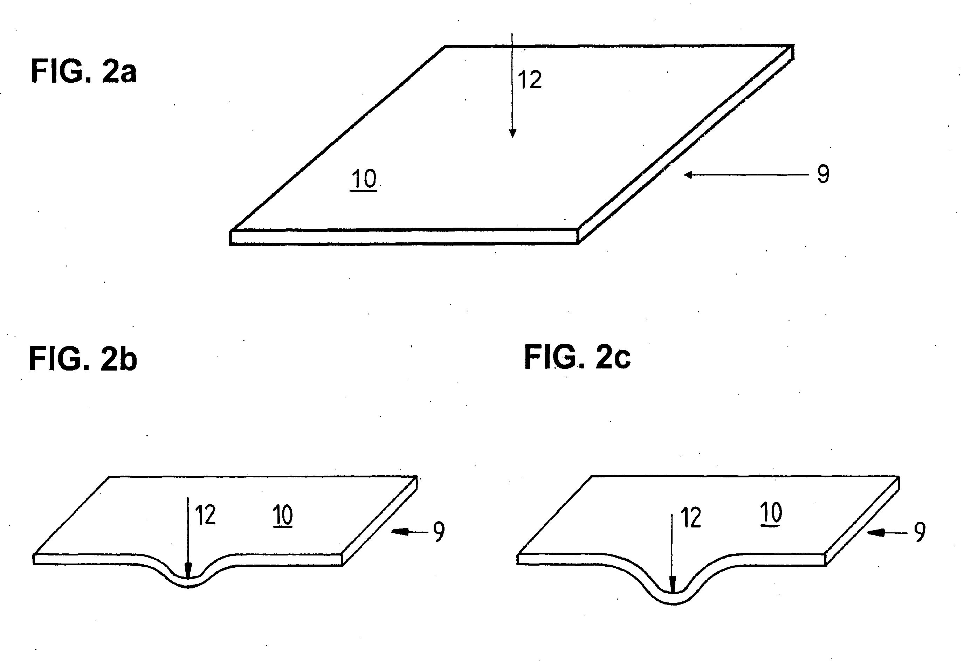

In der Fig.2a-c ist in einer von den übrigen Reifenbauteilen isolierten Darstellung die Einlage 9 vor dem Eindringen und im Fall eines eindringenden spitzen Gegenstandes 12 dargestellt. Der Pfeil symbolisiert den eindringenden Gegenstand 12. Die Oberseite 10 der Einlage weist eine Antihaftbeschichtung auf, so dass die Oberseite 10 der Einlage nicht an der nicht dargestellten aufliegenden Karkasslage anhaftet. Die Einlage 9 ist aus einem hochflexiblen, dehnbaren und nicht zu durchstechenden Polymer gefertigt, so dass durch den eindringenden Gegenstand die Einlage trichterförmig nach axial innen ausgelenkt wird. Dieses ist nur ermöglicht, weil die Oberseite 10 nicht an der Karkasslage anhaftet, während die Karkasse ihre Form nicht verändert. Durch die Auslenkung und das Ausweichen beim Eindringen des Gegenstandes wird dessen Energie durch die Einlage 9 absorbiert. Die trichterförmige Auslenkung im Zeitpunkt des Eindringens ist größer als der eingedrungene Gegenstand 12. Die Einlage 9 wird nicht durchstochen. Die unter der Einlage angeordnete, nicht dargestellte Innenschicht 4 bleibt unverletzt. Die Fig.2c zeigt eine Darstellung des tiefer eingedrungenen Gegenstandes 12.

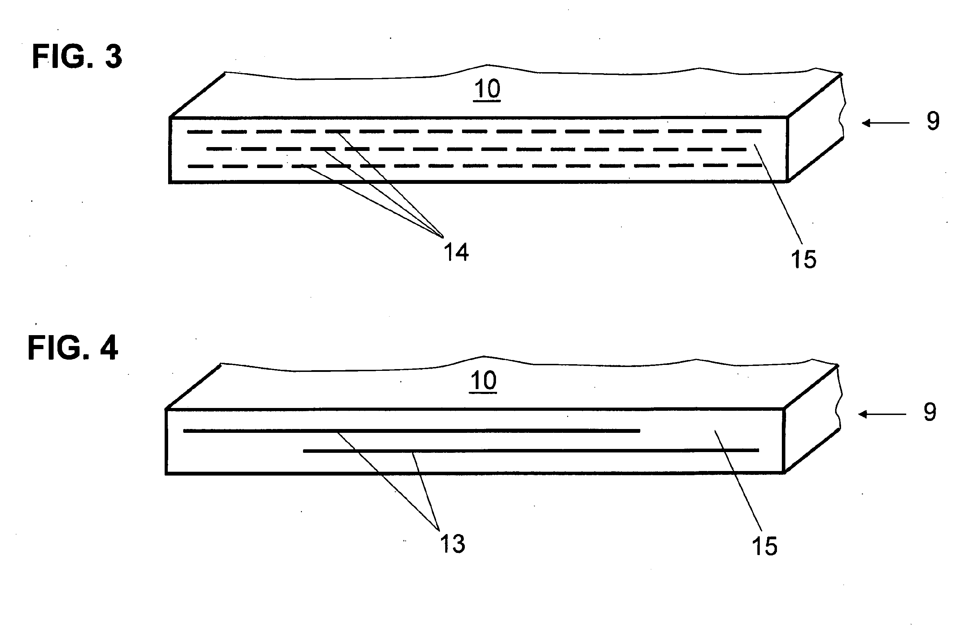

Die Fig.3 zeigt eine räumliche Darstellung des Aufbaus einer bestimmten Ausführungsform der Einlage 9. Die Einlage 9 ist mehrlagig aus mehreren horizontal und parallel zueinander angeordneten Lagenabschnitten 14 aufgebaut. Die Lagenabschnitte 14 sind in einer Matrix 15 aus flexiblem, hochdehnbarem Gummi angeordnet. Die Lagenabschnitte 14 sind flach und bestehen aus rigidem Material. Die in Abschnitte durchbrochenen Lagen sind zueinander derart horizontal versetzt, dass eine Lagendurchbrechung unter- oder oberhalb eines rigiden Lagenabschnittes einer benachbarten, parallelen Lagen liegt. Die Gummimatrix 15 besteht aus einer hochflexiblen, in alle Raumrichtungen gleich dehnbaren Mischung. Bei einem von außen in den Reifen eindringenden Gegenstand 12, der auf die Einlage 9 stößt, trifft der Gegenstand auf einen rigiden Lagenabschnitt 14. Dieser wirkt quasi als steifes Schutzschild. Die Energie des eindringenden Gegenstandes 12 wird in Dehnung der flexiblen Gummimatrix umgesetzt, indem eine in etwa trichterförmige Verformung in Richtung axial innen stattfindet. Die Einlage 9 und so auch die Innenschicht 4 wird nicht durchbrochen.

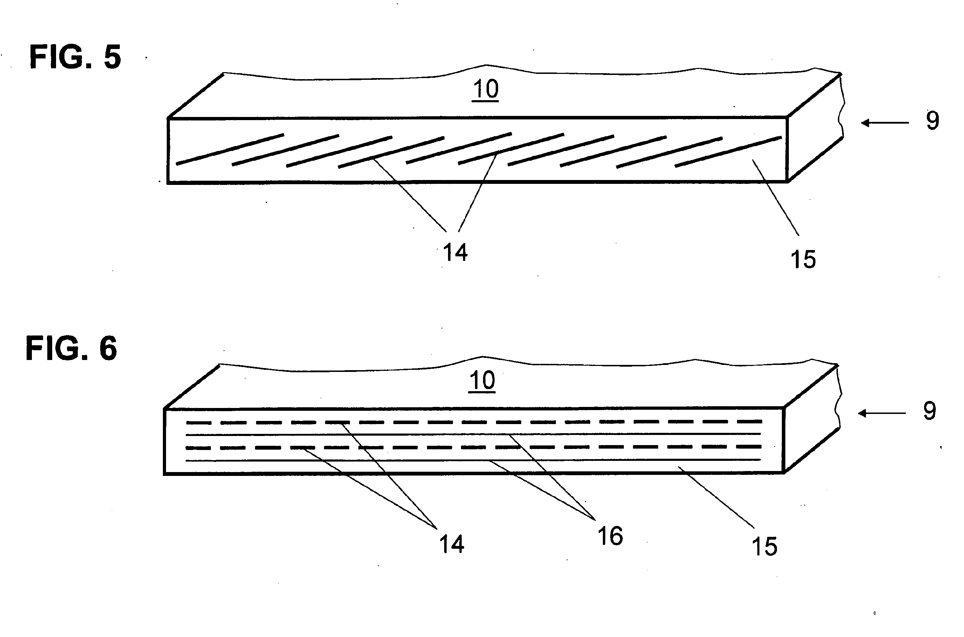

Die Fig.4 und Fig.5 zeigen weitere Anordnungen der Lagenabschnitte 14 auf Basis der in Fig.3 beschriebenen Ausgestaltung der Einlage. Die Lagenabschnitte der Fig.4 sind Lagen 13 aus rigidem Material. Die Gummimatrix 15 besteht aus hochflexiblem, dehnbaren Gummimaterial. Die Oberfläche 10 der Einlage haftet chemisch nicht an der oberhalb der Oberfläche angeordneten Lage. Die Fig.5 zeigt eine dachziegelartige Anordnung der Lagenabschnitte 14, wobei jeder Lagenabschnitt vollständig in der Gummimatrix 15 eingebettet ist.

In der Fig.6 ist die in der Fig.3 im Querschnitt dargestellte Einlage 9 um weitere Lagen in Form von hochdehnbaren textilen Geweben 16 wie Nylon 6 ergänzt.

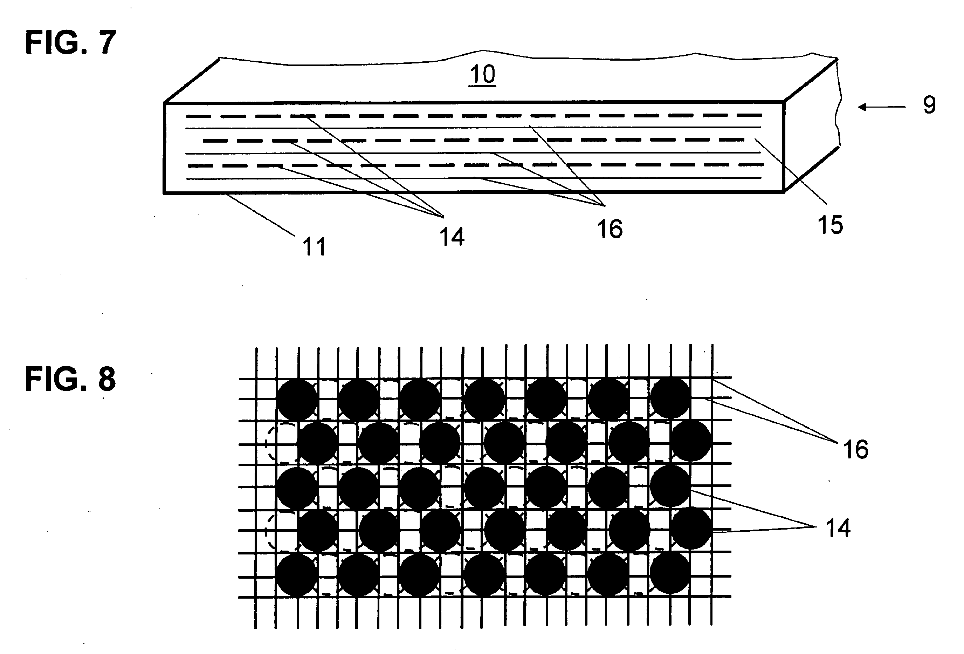

In der Fig.7 und Fig.8 ist eine weitere Ausführungsform der Einlage 9 dargestellt, wobei die Fig.7 einen Querschnitt und die Fig.8 eine von der Gummimatrix befreite Aufsicht auf die Einlage 9 darstellt.
Die Einlage 9 weist einen lagenartigen Aufbau aus vorbeschriebenen, hier aber kreisförmigen flachen rigiden Lagenabschnitten 14 auf, zwischen denen sich Lagen aus hochdehnbarem textilem Gewebe 16 befinden. Die in Aufsicht kreisförmigen Lagenabschnitte 14 sind pro Lage zueinander horizontal versetzt angeordnet, so dass die Lagenabschnitte einer parallel liegenden Lage die Durchbrechungen der darüber und/oder darunterliegenden Lage abdecken. Die Oberseite 10 haftet chemisch nicht an der oberhalb auf dieser Einlage aufliegenden Karkasse (nicht dargestellt). Die Unterseite 11 ist hier aus Material der luftundurchlässigen Innenschicht gefertigt. Bei Gestaltung der Unterseite 11 aus Material der Innenschicht kann bei allen offenbarten Ausführungsformen diese Einlage unmittelbar auf der Innenschicht angeordnet sein, so dass die Innenschicht mit Einlage in einem Arbeitsgang beim Reifenaufbau als eine Lage auf die Reifenaufbautrommel aufgebracht werden kann.

### Bezugszeichenliste

### (Teil der Beschreibung)

- 1: Laufstreifen
- 2: Gürtel
- 3: Karkasse
- 4: Innenschicht
- 5: Wulst
- 6: Wulstkern
- 7: Wulstkernprofil
- 8: Seitenwand
- 9: Einlage
- 10: Oberseite der Einlage
- 11: Unterseite der Einlage
- 12: Gegenstand
- 13: Lage
- 14: Lagenabschnitt
- 15: Gummimatrix
- 16: Gewebe

## Patentansprüche

1. Fahrzeugluftreifen, bestehend aus einem profilierten Laufstreifen (1), einem mehrlagigen Gürtelverband (2), einer luftdichten Innenschicht (4), einer zumindest einlagig ausgeführten Karkasse (3), zugfesten Kernen (6), Seitenwänden (8) und einer schützenden Einlage (9) zur Vermeidung von Luftdruckverlust durch Undichtigkeit der Innenschicht (4) durch einen von außen in den Reifen eindringenden Gegenstand (12), wobei die Einlage (9) unterhalb des profilierten Laufstreifens (1) über den Umfang geschlossen angeordnet ist und zumindest die Breite der Reifenaufstandsfläche aufweist, wobei die Einlage (9) flexibel und zum Ausweichen bei eindringenden Gegenständen leicht verform- und dehnbar ausgeführt ist
**dadurch gekennzeichnet,**
**dass** die Einlage (9) zwischen Innenschicht (4) und Karkasse (3) zur Verhinderung von Durchstichen der Innenschicht (4) angeordnet ist und
**dass** zumindest die radial außen gelegene Oberfläche (10) der Einlage aus einem Material oder einer Beschichtung besteht, welches nicht an der oberhalb der Einlage (9) angeordneten Schicht haftet.

2. Fahrzeugluftreifen nach Anspruch 1,
**dadurch gekennzeichnet,**
**dass** zumindest die radial außen gelegene Oberfläche (10) der Einlage aus Teflon besteht oder eine Beschichtung aus Teflon aufweist.

3. Fahrzeugluftreifen nach Anspruch 1 oder 2,
**dadurch gekennzeichnet,**
**dass** die Einlage (9) eine Polymerlage oder eine in Gummi eingebettete Lage oder eine in Gummi eingebettete Cordlage aus Nylon 6, Nylon 6.6, Elastan, Polyamid, Aramid oder Leichtmetall ist.

4. Fahrzeugluftreifen nach einem der vorangehenden Ansprüche,
**dadurch gekennzeichnet,**
**dass** parallel zur ersten Innenschicht (4) zwischen dieser ersten Innenschicht (4) und der Karkasse (3) eine zweite Innenschicht angeordnet ist, wobei die erste (4) und die zweite Innenschicht derart zueinander angeordnet sind, dass beide die durchstichresistente Einlage (9) zwischen sich einschließen.

5. Fahrzeugluftreifen nach einem der vorangehenden Ansprüche,
**dadurch gekennzeichnet,**
**dass** oberhalb der durchstichresistenten Einlage (9) eine nicht haftende Latexlage eingebracht ist.

6. Fahrzeugluftreifen nach einem der vorangehenden Ansprüche,
**dadurch gekennzeichnet,**
**dass** die durchstichresistente Einlage (9) bis in die Seitenwände (8) reichend ausgeführt ist.

7. Fahrzeugluftreifen nach einem der Ansprüche,
**dadurch gekennzeichnet,**
**dass** die durchstichresistente Einlage (9) mehrlagig ausgeführt ist.

8. Fahrzeugluftreifen nach Anspruch 7,
**dadurch gekennzeichnet,**
**dass** die Einlage (9) aus einer Gummimatrix (15) besteht, in die wenigstens zwei voneinander beabstandete Lagen (13) eingebettet sind, die parallel zur Einlagenoberfläche (10) angeordnet sind und aus rigiden Material bestehen.

9. Fahrzeugluftreifen nach Anspruch 8,
**dadurch gekennzeichnet,**
**dass** jede Lage (13) in regelmäßigen Abständen durchbrochen ist und
die zweite Lage derart gegenüber der ersten Lage versetzt angeordnet ist, so dass die Durchbrechungen einer Lage unter- oder oberhalb von rigiden Lagenabschnitten (14) der weiteren Lage liegen.

10. Fahrzeugluftreifen nach Anspruch 8,9,
**dadurch gekennzeichnet,**
**dass** die Lagenabschnitte (14) eine Breite von 5 mm und eine Länge von 300 mm, vorzugsweise eine Breite von 20 mm und eine Länge von 150 mm aufweisen
oder dass die Lagenabschnitte Kreise oder Ovale mit einem Durchmesser von 5 mm bis 50 mm, vorzugsweise 10 mm sind.

11. Fahrzeugluftreifen nach Anspruch 8 - 10,
**dadurch gekennzeichnet,**
**dass** wenigstens eine weitere Lage in Form eines Textilgewebes (16) zwischen den Lagen (13, 14) aus rigidem Material angeordnet ist, wobei das Textilgewebe (16) aus hochdehnbarem Material wie beispielsweise Nylon 6, Nylon 6.6 und/oder Elasten besteht.

12. Fahrzeugreifen nach Anspruch 7,
**dadurch gekennzeichnet,**
**dass** die Einlage (9) aus parallel zueinander angeordneten, in einer Gummimasse (15) eingebetteten Lagen (13) besteht, die dachziegelartig einander überlappend und gegeneinander verschiebbar angeordnet sind.

13. Fahrzeugreifen nach Anspruch 12,
**dadurch gekennzeichnet,**
**dass** wenigstens eine weitere Lage (16) in Form eines hochdehnbaren Textilgewebes oberhalb und/oder unterhalb der dachziegelartig einander überlappenden Lagen (14) parallel zur Oberfläche (10) der Einlage (9) angeordnet ist.

## Claims

1. Pneumatic vehicle tyre, comprising a profiled tread rubber (1), a multi-ply breaker belt assembly (2), an airtight inner layer (4), a carcass (3) of at least a single-ply configuration, high-tensile strength cores (6), sidewalls (8) and a protective insert (9) to avoid loss of air pressure through piercing of the inner layer (4) by an object (12) penetrating the tyre from the outside, the insert (9) being arranged uninterruptedly over the circumference under the profiled tread rubber (1) and having at least the width of the contact area of the tyre, the insert (9) being made flexible and readily deformable and extensible to move out of the way of penetrating objects, **characterized in that** the insert (9) is arranged between the inner layer (4) and the carcass (3) to prevent puncturing of the inner layer (4) and **in that** at least the radially outer surface (10) of the insert consists of a material or a coating which does not adhere to the layer arranged above the insert (9).

2. Pneumatic vehicle tyre according to Claim 1,
**characterized in that** at least the radially outer surface (10) of the insert consists of Teflon or has a Teflon coating.

3. Pneumatic vehicle tyre according to Claim 1 or 2, **characterized in that** the insert (9) is a polymer ply or a rubber-embedded ply or a rubber-embedded cord ply of nylon 6, nylon 6.6, elastane, polyamide, aramid or light metal.

4. Pneumatic vehicle tyre according to one of the preceding claims, **characterized in that** a second inner layer is arranged parallel to the first inner layer (4), between this first inner layer (4) and the carcass (3), the first inner layer (4) and the second inner layer being arranged in such a way that the two enclose the puncture-resistant insert (9) between them.

5. Pneumatic vehicle tyre according to one of the preceding claims, **characterized in that** a non-adhesive latex ply is introduced above the puncture-resistant insert (9).

6. Pneumatic vehicle tyre according to one of the preceding claims, **characterized in that** the puncture-resistant insert (9) is made to extend into the sidewalls (8).

7. Pneumatic vehicle tyre according to one of the preceding claims, **characterized in that** the puncture-resistant insert (9) is of a multi-ply configuration.

8. Pneumatic vehicle tyre according to Claim 7, **characterized in that** the insert (9) comprises a rubber matrix (15), embedded in which are at least two spaced-apart plies (13), which are arranged parallel to the single-ply surface (10) and consist of rigid material.

9. Pneumatic vehicle tyre according to Claim 8, **characterized in that** each ply (13) is interrupted at regular intervals and the second ply is arranged offset with respect to the first ply such that the interruptions of one ply lie beneath or above the rigid ply portions (14) of the other ply.

10. Pneumatic vehicle tyre according to Claim 8 or 9, **characterized in that** the ply portions (14) have a width of 5 mm and a length of 300 mm, preferably a width of 20 mm and a length of 150 mm, or **in that** the ply portions are circles or ovals with a diameter of 5 mm to 50 mm, preferably 10 mm.

11. Pneumatic vehicle tyre according to Claims 8-10, **characterized in that** at least one further ply in the form of a textile fabric (16) is arranged between the plies (13, 14) of rigid material, the textile fabric (16) consisting of highly extensible material, such as for example nylon 6, nylon 6.6 and/or elastane.

12. Pneumatic vehicle tyre according to Claim 7, **characterized in that** the insert (9) comprises plies (13) which are arranged parallel to one another, are embedded in a rubber compound (15) and are arranged overlapping one another in the manner of roof tiles and such that they can be displaced with respect to one another.

13. Pneumatic vehicle tyre according to Claim 12, **characterized in that** at least one further ply (16) in the form of a highly extensible textile fabric is arranged above and/or below the plies (14) overlapping one another in the manner of roof tiles, parallel to the surface (10) of the insert (9).

## Revendications

1. Pneu de véhicule, composé d'une bande de roulement profilée (1), d'un ensemble de nappes de sommet à plusieurs couches (2), d'une couche intérieure (4) étanche à l'air, d'une carcasse (3) réalisée en au moins une couche, de tringles (6) résistant à la traction, de flancs (8) et d'une ceinture de protection (9) destinée à éviter une perte de pression d'air par manque d'étanchéité de la couche intérieure (4) à cause d'un objet (12) pénétrant par l'extérieur dans le pneu, dans lequel la ceinture (9) fermée sur la périphérie est disposée en dessous de la bande de roulement profilée (1) et présente au moins la largeur de la surface de contact du pneu, dans lequel la ceinture (9) est souple et facilement déformable ou extensible pour se déplacer en cas de pénétration d'objets, **caractérisé en ce que** la ceinture (9) est disposée entre la couche intérieure (4) et la carcasse (3) pour empêcher la perforation de la couche intérieure (4) et **en ce qu'**au moins la surface radialement extérieure (10) de la ceinture se compose d'un matériau ou d'un revêtement, qui n'adhère pas à la couche disposée au-dessus de la ceinture (9).

2. Pneu de véhicule selon la revendication 1,
**caractérisé en ce qu'**au moins la surface radialement extérieure (10) de la ceinture est composée de Téflon ou présente un revêtement en Téflon.

3. Pneu de véhicule selon la revendication 1 ou 2, **caractérisé en ce que** la ceinture (9) est une couche de polymère ou une couche noyée dans du caoutchouc ou une couche de câbles de nylon 6, nylon 6.6, élasthane, polyamide, aramide ou métal léger, noyée dans du caoutchouc.

4. Pneu de véhicule selon l'une quelconque des revendications précédentes, **caractérisé en ce qu'**une deuxième couche intérieure est disposée parallèlement à la première couche intérieure (4), entre cette première couche intérieure (4) et la carcasse (3), dans lequel la première (4) et la deuxième couches intérieures sont disposées l'une par rapport à l'autre de telle manière que les deux enferment entre elles la ceinture (9) résistant à la perforation.

5. Pneu de véhicule selon l'une quelconque des revendications précédentes, **caractérisé en ce qu'**une couche de latex non adhérente est insérée au-dessus de la ceinture (9) résistant à la perforation.

6. Pneu de véhicule selon l'une quelconque des revendications précédentes, **caractérisé en ce que** la ceinture (9) résistant à la perforation se prolonge jusque dans les flancs (8).

7. Pneu de véhicule selon l'une quelconque des revendications précédentes, **caractérisé en ce que** la ceinture (9) résistant à la perforation est réalisée en plusieurs couches.

8. Pneu de véhicule selon la revendication 7, **caractérisé en ce que** la ceinture (9) se compose d'une matrice de caoutchouc (15), dans laquelle sont noyées au moins deux couches (13) espacées l'une de l'autre, qui sont disposées parallèlement à la surface (10) de la ceinture et qui se composent d'un matériau rigide.

9. Pneu de véhicule selon la revendication 8, **caractérisé en ce que** chaque couche (13) est interrompue à intervalles réguliers et la deuxième couche est disposée avec un décalage par rapport à la première couche, de telle manière que les interruptions d'une couche soient situées en dessous ou au-dessus de sections de couche rigides (14) de l'autre couche.

10. Pneu de véhicule selon la revendication 8 ou 9, **caractérisé en ce que** les sections de couche (14) présentent une largeur de 5 mm et une longueur de 300 mm, de préférence une largeur de 20 mm et une longueur de 150 mm, ou **en ce que** les sections de couche sont des cercles ou des ovales d'un diamètre de 5 mm à 50 mm, de préférence de 10 mm.

11. Pneu de véhicule selon les revendications 8 à 10, **caractérisé en ce qu'**au moins une autre couche sous forme d'un tissu textile (16) est disposée entre les couches (13, 14) en matériau rigide, dans lequel le tissu textile (16) se compose d'un matériau hautement extensible comme par exemple le nylon 6, le nylon 6.6 et/ou l'élasthane.

12. Pneu de véhicule selon la revendication 7, **caractérisé en ce que** la ceinture (9) se compose de couches (13) noyées dans une masse de caoutchouc (15) et disposées parallèlement l'une à l'autre, qui sont disposées de façon à pouvoir glisser l'une par rapport à l'autre et en se recouvrant mutuellement à la manière de tuiles de toiture.

13. Pneu de véhicule selon la revendication 12, **caractérisé en ce qu'**au moins une autre couche (16) sous la forme d'un tissu textile hautement extensible est disposée parallèlement à la surface (10) de la ceinture (9) au-dessus et/ou en dessous des couches (14) se recouvrant mutuellement à la manière de tuiles de toiture.
